# EUROPEAN PATENT APPLICATION

(11) **EP 3 851 237 A1**
(43) Date of publication of application: **21.07.2021**
(21) Application number: 20164566.0
(22) Date of filing: 20.03.2020
(51) Int. Cl.: B23K 11/31

(54) **METHOD OF ASSEMBLING A LOWER ELECTRODE MECHANISM FOR WELDING AND LOWER ELECTRODE MECHANISM FOR WELDING**

(30) Priority: 15.01.2020 JP 2020004688
(71) Applicant: Smk Co., Ltd., Kanagawa 252-0152 (JP)
(72) Inventor: Hidaka, Masato, Kanagawa, 252-0152 (JP)
(74) Representative: Beck Greener LLP

(57) **Abstract**

In a method of assembling a lower electrode mechanism 1, after a support tube 5 and an electrode holder 4 are integrally assembled, a cylindrical assembly case 13 is inserted into the support tube 5 from the bottom to align an elongated hole 5a of the support tube 5 with an elongated hole 13h of the assembly case 13 to assemble them. The rod assembly 7 is inserted into the tube from the upper part of the electrode holder 4 to fix the rod assembly 7 inside of the assembly case 13 in the support tube 5. The lower end of the rod 8 of the rod assembly 7 is placed to a position visible through the elongated hole 5h of the support tube 5. A protruding bar 14 is inserted into the support tube 5 through the elongated hole 5h of the support tube 5, the base end of the protruding bar 14 is fixed to the lower end of the rod 8, and the slide sensor 15 is attached to the support tube 5 while the distal end of the protruding bar 14 and detector 15a of the slide sensor 15 are connected.

## Description

### FIELD

The present invention relates to a lower electrode mechanism for welding and to a method of assembling a lower electrode mechanism for welding. In particular embodiments, the invention relates to a technique for downsizing and simplifying a lower electrode mechanism for use in combination with an upper electrode mechanism in electric resistance welding in which electric current is applied to an object to be welded while the object is sandwiched and pressurized, and the technique also for reliably reducing defective welding.

### BACKGROUND

In Japanese Utility Model Registration No. 3211522, the present applicant has proposed a technique for slightly displacing a slide sensor from the axis of a positioning pin to the side for detecting an ascending/descending stroke of the positioning pin, as a technique for decreasing the height of the lower electrode mechanism in electric resistance welding and making it more compact. This technique uses a compression spring that is disposed around a rod extending downward from the positioning pin so that the positioning pin is always biased upward, and a slide sensor that is attached to a sensor holding tube surrounding a lower end of the rod. In the technique, a detector of the slide sensor is connected to the lower end of the rod to detect an ascending/descending stroke of the rod.

In the above-described technique, however, heat is generated around the lower electrode during welding, and dew condensation sometimes occurs on the electrode itself and/or around the rod in humid weather conditions or the like. The condensation adversely affects the slide sensor, which might lower accuracy of stroke detection and lower welding quality. Moreover, although the slide sensor is replaceable by the user, it is only the manufacturer who can easily connect a detector of the slide sensor to the lower end of the rod. For this reason, another concern is that the slide sensor cannot be easily replaced on the spot.

The present invention aims to address these problems, and in particular aims to to provide a lower electrode assembly in which dew condensation occurring on the electrode itself and/or around the rod does not adversely affect stroke detection of the slide sensor and the slide sensor can be easily replaced by the user on the spot.

According to aspects of the present invention, there is provided a method for assembling a lower electrode mechanism for welding according to independent claim 1, and a lower electrode mechanism for welding according to independent claim 4. Preferred embodiments are defined by the dependent claims.

The present invention provides a method for assembling a lower electrode structure, the lower electrode structure including an electrode holder, a support tube supporting the electrode holder and having an elongated hole, a rod assembly mounted in the electrode holder and including a rod biased by a compression spring, a tubular assembly case for covering a lower end of the rod assembly and having an elongated hole on a side surface thereof, a slide sensor attached around the elongated hole of the support tube, and a protruding bar for connecting between a detector of the sensor and a rod of the rod assembly. The method includes: integrally assembling the support tube and the electrode holder; inserting the assembly case from the bottom of the support tube and aligning the elongated hole of the support tube with the elongated hole of the assembly case to assemble the support tube and the assembly case; inserting the rod assembly into the tube from the top of the electrode holder and fixing the rod assembly inside the assembly case disposed in the support tube; placing a lower end of the rod of the rod assembly to a position visible through the elongated hole of the support tube, and inserting the protruding bar into the support tube through the elongated hole of the support tube, so as to fix a base end of the protruding bar to the lower end of the rod; and connecting a distal end of the protruding bar to the detector of the slide sensor to attach the slide sensor to the support tube.

By connecting the rod and the detector of the slide sensor via the protruding bar, the slide sensor is positioned radially separated from the periphery of the rod. Thus dew condensation on the electrode itself and/or around the rod does not affect the slide sensor, increasing the detection accuracy.

Note that the rod assembly is a compression spring. This is because the compression spring constantly biases the rod of the rod assembly upward so that the positioning pin, which is to be placed above the rod assembly, is positioned in place, which increases the accuracy of measurements of ascending/descending strokes of the rod.

When the rod of the rod assembly is connected to the protruding bar via a bar connecting member attached to the lower end of the rod, the connection therebetween is facilitated.

In addition, when the support tube is connected to the slide sensor by interposing therebetween a sensor holding member that is composed of an electrically insulating material and that has an elongated hole, electrically adverse effects can be prevented, as compared with a case where a slide sensor is directly fixed to the metal support tube. This configuration increases the accuracy of measurements.

Further, in an embodiment, as the lower electrode mechanism for welding, the assembly case and the sensor holding member are composed of an electrically insulating material, and the elongated hole in the sensor holding member is one size smaller than that in a mounting part of the support tube.

This configuration prevents direct contact between the protruding bar and the support tube and avoids electrical interference with the slide sensor even when the protruding bar and the support tube are composed of metal members. Thus the detection accuracy can be further increased. When an electrically insulating material is made of a heat-insulating material such as plastic, the space between the slide sensor and the rod is blocked by two tiers of the heat-insulating materials, which more effectively prevents dew condensation too.

In an embodiment, for a connection configuration between the distal end of the protruding bar and the detector of the slide sensor, the bifurcated part of the distal end of the protruding bar sandwiches the detector in the up-down direction to allow relative movement in the horizontal direction.

The configuration facilitates the connection procedure for replacement of the slide sensor, and increases the durability of components including the slide sensor because no excessive force is applied to the connection even when the distal end of the protruding bar slightly swings in the right-left direction.

When the protruding bar is connected to the lower end of the rod and the distal end of the protruding bar is connected to the detector of the slide sensor attached to the support tube, the position of the slide sensor can be set far away from the rod. Thus, dew condensation on the electrode itself and/or around the rod does not affect the slide sensor, increasing the detection accuracy.

Further, when the rod is connected to the protruding bar via a bar connecting member, the connecting operation becomes easy and reliable.

Here, the assembly case and the sensor holding member are composed of an electrically insulating material, and the elongated hole in the sensor holding member is one size smaller than that in the mounting part of the support tube. This configuration prevents direct contact between the protruding bar and the support tube, and avoids electrical interference with the slide sensor even if the protruding bar and the support tube are composed of metal members, which further increases the detection accuracy. Furthermore, for a connection configuration between the distal end of the protruding bar and the detector of the slide sensor, the bifurcated part of the distal end of the protruding bar sandwiches the detector in the up-down direction to allow relative movement in the horizontal direction. The configuration facilitates the connection procedure for replacement of the slide sensor, and no excessive force is applied to the connection between the distal end of the protruding bar and the detector, increasing durability thereof.

### BRIEF DESCRIPTION OF DRAWINGS

FIG. 1 illustrates an overall view of an example of a lower electrode mechanism for welding according to an embodiment of the present invention.
FIG. 2 is an explanatory view of a lower electrode and an electrode holder: FIG. 2A illustrates the lower electrode and an inner tube of the electrode holder, and FIG. 2B illustrates an outer tube of the electrode holder, and FIG. 2C illustrates the electrode holder having the combined inner and outer tubes.
FIG. 3 is an explanatory view of a support tube: FIG. 3A illustrates the support tube and its bottom cap, and FIG. 3B illustrates a sensor holding member to be mounted on a mounting part of the support tube.
FIG. 4 is an explanatory view of a rod assembly: FIG. 4A illustrates a state before assembly, and FIG. 4B illustrates a state after assembly.
FIG. 5 is an explanatory view of an assembly case: FIG. 5A is a side view, FIG. 5B is a front view, and FIG. 5C is a perspective view.
FIG. 6 is an explanatory view of a protruding bar: FIG. 6A is a plan view, FIG. 6B is a side view, and FIG. 6C is a perspective view.
FIG. 7 illustrates a slide sensor.
FIG. 8 illustrates a support tube and an electrode holder combined together.
FIG. 9 illustrates a manner for assembling an assembly case and a rod assembly.
FIG. 10 partially illustrates a state of the rod assembly mounted in the assembly case.
FIG. 11 partially illustrates a connection between a bar connecting member of a rod assembly and a protruding bar.
FIG. 12 illustrates a state to mount a sensor holding member on a mounting part of a support tube.
FIG. 13 illustrates a state to mount a slide sensor on a sensor holding member.

### DESCRIPTION OF EMBODIMENTS

An example of an embodiment of the present invention is described.

The preferred embodiments of the present invention relate to a technique for downsizing and simplifying a lower electrode mechanism for welding and simultaneously improving welding quality, the electrode being used in combination with an upper electrode in an electric resistance welding machine for welding by sandwiching, pressurizing and energizing an object. The technique is an improvement of that proposed already in Japanese Utility Model Registration No. 3211522 by the present inventor, and reduces effects, on a slide sensor, of dew condensation that sometimes occurs around the lower electrode and the central axial rod, and facilitates the procedure for replacement of the slide sensor.

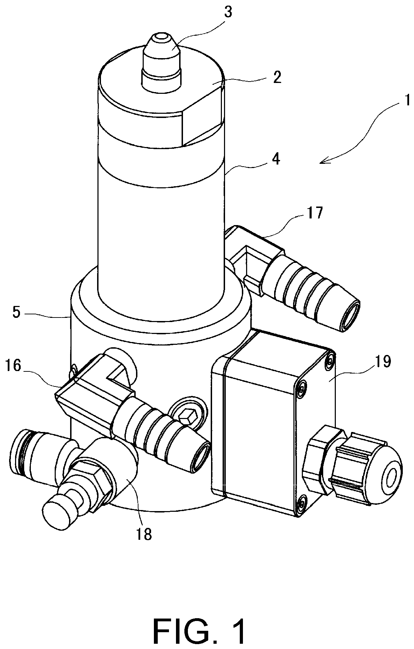

FIG. 1 is an overall view of an example of a lower electrode mechanism for welding 1 according to an embodiment of the present invention, which is disposed below an upper electrode mechanism (not shown), to sandwich and pressurize an object between a lower electrode 2 of the lower electrode mechanism 1 and an upper electrode (not shown) of the upper electrode mechanism, so that electric current application to the upper and lower electrodes causes a projection of the object to melt for welding. During the sandwiching and pressurizing the object, a positioning pin 3 projecting upward through the center of the lower electrode 2 is pushed downward and descends a predetermined stroke. The stroke is measured to determine, for example, whether the type of the object is regular and whether the number of the object is normal. When normal, an electric current is applied, and if abnormal, a control to stop the application for example is performed. When the welding is completed and the object is removed, the positioning pin 3 is automatically restored to the original position and protrudes above the lower electrode 2.

Hereinafter, details of the lower electrode mechanism for welding 1 are sequentially described.

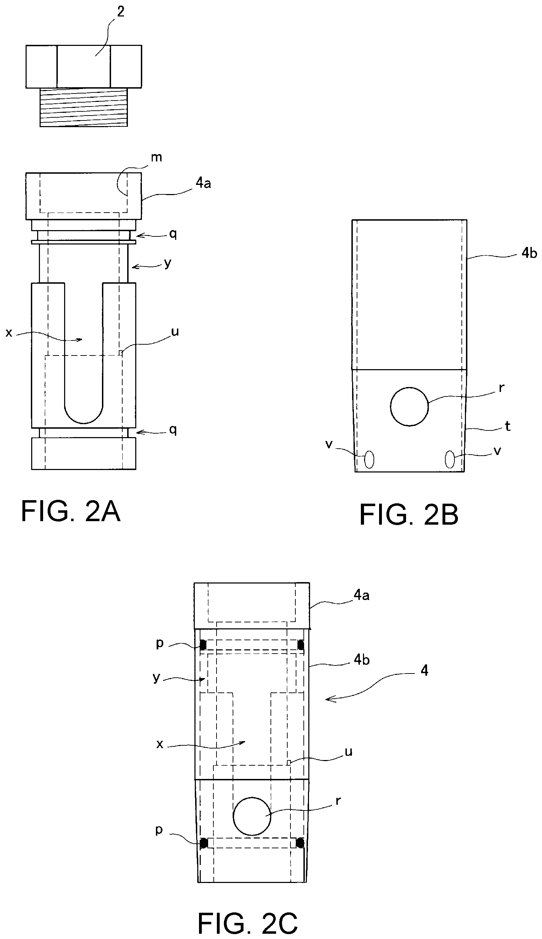

An electrode holder 4 where the lower electrode 2 is attached has a double-tube structure of an inner tube 4a and an outer tube 4b, as shown in FIG. 2. The inner tube 4a includes, at the upper part, an internal thread m to which an external thread part of the lower electrode 2 is threadable, and includes a projection receiver u where a projection of a later-described assembly case is fitted, at a predetermined middle position in the height direction of the tube.

As shown in FIG. 2A, the inner tube 4a has, in the vertical direction on its outer surface, two cooling-water longitudinal passages x (only one is shown in FIG. 2A) having a predetermined depth and disposed at two diametrically opposed locations. Above the passages x, a cooling-water lateral passage y of a predetermined depth is formed circumferentially in communication with the cooling-water longitudinal passages x. When the outer tube 4b is fitted around and combined with the inner tube 4a, and cooling-water is supplied to one of the longitudinal passages x from below, the water enters the longitudinal passage x, the lateral passage y, and the other longitudinal passage x so as to be discharged from the lower longitudinal passage x. The circulation of the cooling water cools the high-temperature heat generated around the low electrode 2.

Note that, the outer surface of the inner tube 4a has two packing attaching parts q for attaching a packing at upper and lower positions respectively.

The outer tube 4b illustrated in FIG. 2B has, on its lower end, an outer tapered surface t that is tapered from a predetermined location such that the outer diameter gradually decreases toward the lower end so as to be press fitted into a tapered hole of a later-described support tube. The outer tube 4b also has, on its side closer to the lower end, bolt receiving holes v which are four in total, for receiving bolts that are threaded in from a support tube side for fixing to the support tube.

Further, cooling-water holes r through which cooling water flows in and out of the electrode holder 4 are located at two opposing positions on the outer periphery of the outer tube 4b.

The combined electrode holder 4, as described above, having a packing p attached to the packing attaching part q of the inner tube 4a and the outer tube 4b fitted therearound is shown in FIG. 2C.

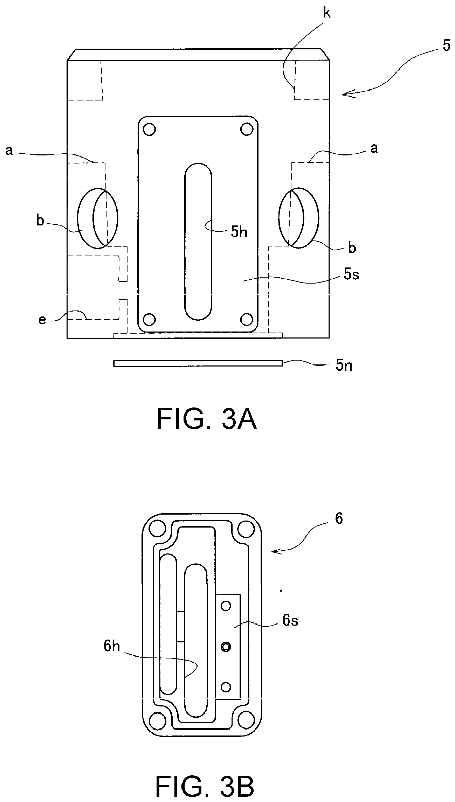

The support tube 5 in FIG. 3A has: a tapered holding hole k for fitting the tapered surface t of the outer tube 4b of the electrode holder 4; two cooling-water passages a that are opposed and communicate with each other in the diameter direction toward the tapered holding hole k, and bolt holes b at the four corners, so that the distal end of a bolt is threaded from one of the bolt holes b into the corresponding bolt receiving hole v in the outer tube 4b of the electrode holder 4. The support tube 5 has, on a side of one lower end thereof, an air supply port e for sending pressurized air into the inner tube 4a of the electrode holder 4.

The support tube 5 further includes, on its front surface, a sensor mounting part 5s for mounting a later-described sensor holding member 6 (FIG. 3B). The sensor mounting part 5s has an elongated hole 5h at the center thereof, and the elongated hole 5h extends in the up-down direction.

The bottom of the inside of the support tube is open in the up-down direction as an opening, and a thread cap 5n is attached to the opening when the assembly is completed.

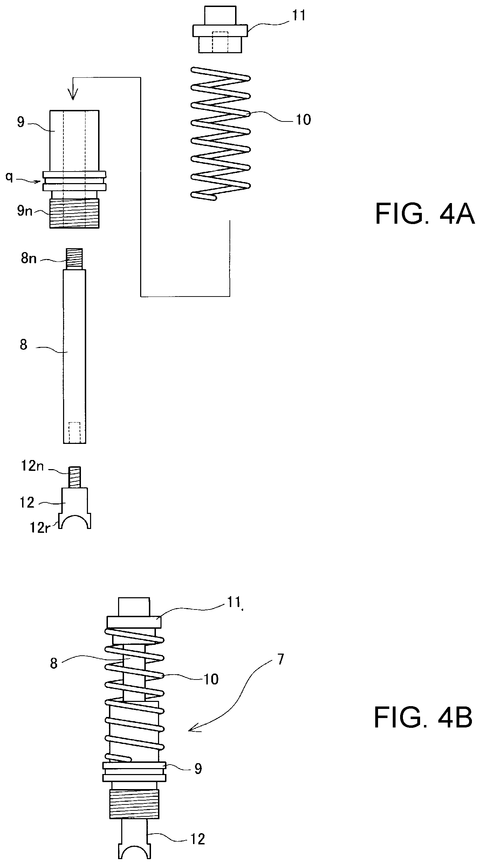

Next, a rod assembly 7 is described with reference to FIG. 4 in terms of its components and the like.

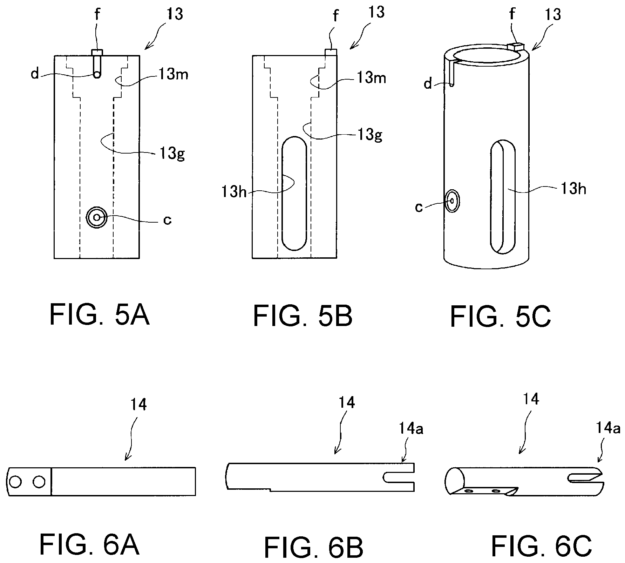

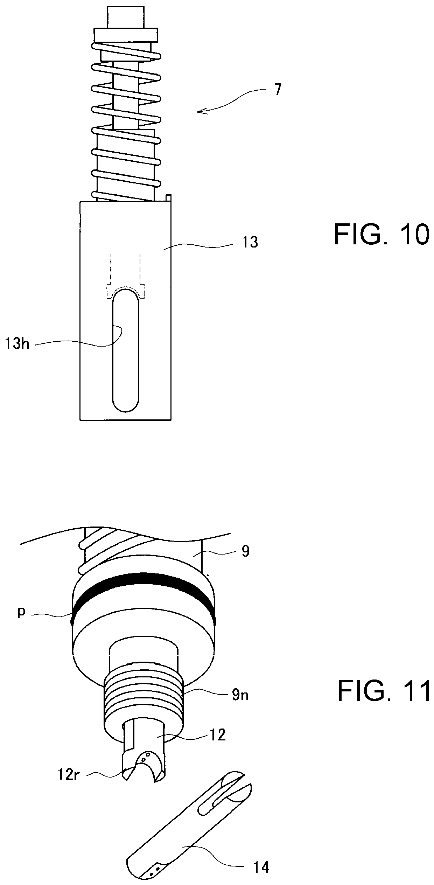

The rod assembly 7 includes a rod 8, a rod guide 9, a spring 10, a seat 11, and a bar connecting member 12. An external thread 8n of the upper end of the rod 8 is threadable to an internal thread of the seat 11, and an external thread 12n of the bar connecting member 12 is threadable to an internal thread of the base end of the rod 8. The rod guide 9 has a guide hole at the center thereof for slidably inserting the rod 8 therethrough. The rod guide 9 also has a packing attaching part q for attaching a packing in the middle of the length direction, and a male thread 9n on the lower part. The male thread 9n is threadable to an internal thread 13m of an assembly case 13 (FIG. 5A) described later. The bar connecting member 12 includes a connecting portion 12r having a slightly larger diameter at the lower end opposite to the external thread 12n. The connecting portion 12r is a linear groove having a substantially U-shaped cross-section for connecting a protruding bar described later. As shown in FIG. 11, the linear groove of the connecting portion 12r has two screw holes for screwing.

A method of assembling the above-described rod assembly 7 is described. After the rod 8 is inserted through the guide hole of the rod guide 9, the spring 10 is arranged around the rod 8, and the seat 11 is threaded and fixed to the upper end of the rod 8. Next, while the spring 10 is slightly contracted, the bar connecting member 12 is threaded into the lower end of the rod 8, to complete the rod assembly 7 with the spring 10 being slightly contracted as shown in FIG. 4B.

The positioning pin 3 is placed on the upper part of the seat 11.

Next, the assembly case 13 is described with reference to FIG. 5.

The assembly case 13 is made of hard plastic, and has, at a part of its upper end, a protrusion f which can be fitted to a protrusion receiver u (FIG. 2C) formed on the inner tube 4a of the electrode holder 4. A guide hole 13g is formed at the center of the assembly case 13 for guiding the large-diameter portion of the bar connecting member 12 of the rod assembly 7 to go up and down. Above the guide hole 13g, the internal thread 13m is located so that the external thread 9n of the rod guide 9 of the rod assembly 7 is threadable.

The assembly case 13 has, on its front side, a vertically elongated hole 13h, and an air receiving part c for receiving pressurized air and an air discharging part d for discharging the received air, in a thick portion of the side opposite to the projection f. The air receiving part c and the air discharging part d communicate with each other through a narrow hole that longitudinally penetrates the thick portion of the assembly case 13. The air discharge part d has a groove for guiding air upward. The air receiving part c of the assembly case 13 is configured to be in communication with the air supply port e of the support tube 5 when the assembly case 13 is assembled inside the support tube 5.

Next, the protruding bar 14 is described with reference to FIG. 6.

The protruding bar 14 transmits the ascending/descending of the rod 8 of the rod assembly 7 to the slide sensor 15 located radially outside the rod 8 from the rod 8. In the present embodiment, the protruding bar 14 is metallic, and has two screw holes for connecting to the bar connecting member 12 of the rod assembly 7 on its base end (left in FIG. 6), and a bifurcated part 14a that is bifurcated in the horizontal direction on its distal end (right in FIG. 6).

The slide sensor 15 includes a detector 15a protruding forward and slidable up and down, and the up-down stroke of the detector 15a is used to electrically detect an amount of ascending/descending stroke of the rod 8. The slide sensor 15 has an attachment part 15s to be attached to the sensor attaching part 6s of the sensor holding member 6.

The sensor holding member 6 (FIG. 3B) is made of hard plastic and can be screwed at the four corners to the mounting part 5s of the support tube 5. The sensor holding member 6 includes the sensor attaching part 6s where a slide sensor is attachable at a part thereof, and an elongated hole 6h extending long in the up-down direction. The elongated hole 6h is one size smaller than the elongated hole 5h of the support tube 5. Thus, as described later, the elongated hole 5h of the support tube 5 and the elongated hole 6h of the sensor holding member 6 are assembled to be aligned. Even if the metallic protruding bar 14 slides up and down through the holes 5h and 6h, the metallic protruding bar 14 does not contact the metallic support tube 5 and only contacts the hard-plastic sensor holding member 6, and thereby electrical interference with the slide sensor is reduced.

A method of assembling the above-described lower electrode mechanism for welding is described.

First, the packing p is attached to each of two upper and lower packing attaching parts q on the outer periphery of the inner tube 4a in FIG. 2. The outer tube 4b is then fitted around the inner tube 4a, and as shown in FIG. 2C, the electrode holder 4 is assembled. The fitting is made such that the cooling-water holes r of the outer tube 4b are positioned in the cooling-water longitudinal passages x of the inner tube 4a, and thereby the cooling water from the cooling water hole r on one side of the outer tube 4b is discharged from the cooling water hole r on the other side of the outer tube 4b through the internal cooling-water longitudinal passage x, the cooling-water horizontal passage y, and the opposite cooling-water longitudinal passage x.

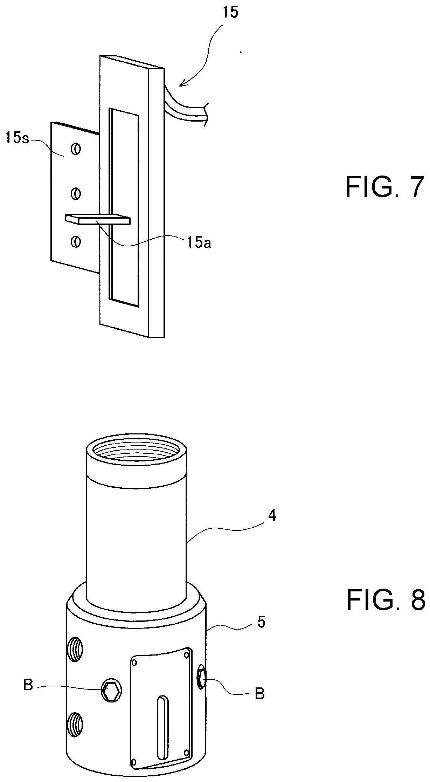

Next, as shown in FIG. 8, the lower tapered surface t of the outer tube 4b of the electrode holder 4 is press-fitted and assembled into the tapered holding hole k of the support tube 5, and bolts B are inserted through four bolt holes b respectively to assemble. The assembly is made such that the cooling-water hole r of the outer tube 4b of the electrode holder 4 is aligned with the cooling-water passage a of the support tube 5, and thereby the cooling water from the cooling-water passage a on one side of the support tube 5 is discharged from the cooling-water passage a on the other side of the support tube. Here, by press-fitting and assembling the lower tapered surface t of the outer tube 4b of the electrode holder 4 to the tapered holding hole k of the support tube 5, the fitting surfaces come in close contact with each other, and application of a welding current thereto is unlikely to cause problems such as electrolytic corrosion. In contrast, in an ordinary type (straight surface fitting), a gap or the like easily appears in the fitting surfaces, which often causes entrance of water for example and problems such as electrolytic corrosion upon welding current application.

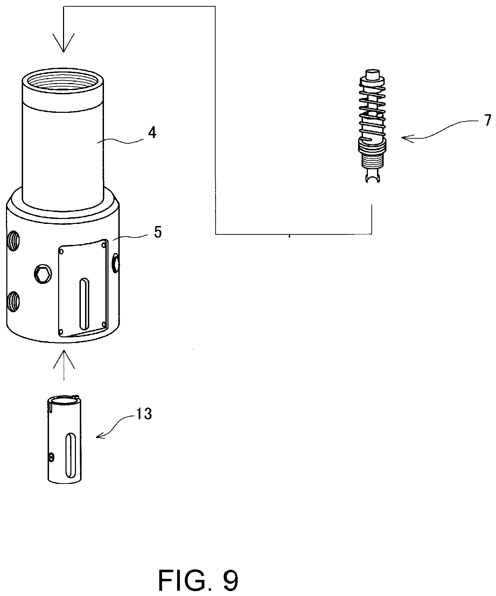

Next, as shown in FIG. 9, the assembly case 13 is inserted into the support tube 5 from the bottom to assemble them. Here, when the assembly is made with the projection f of the assembly case 13 being fitted to the projection receiver u of the inner tube 4a (FIG. 2C), the elongated hole 13h of the assembly case is aligned with the elongated holes 5h of the support tube 5, and also the air receiving part c of the assembly case 13 is positioned with respect to the air supply port e of the support tube 5 so as to communicate with each other.

Next, the rod assembly 7 is inserted into the electrode holder 4 from above, and the external thread 9n of the rod guide 9 is threaded into the internal thread 13m of the assembly case 13 and fixed thereto.

Since the bar connecting member 12 at the lower end of the rod 8 is not completely visible laterally through the elongated hole 13h as shown in FIG. 10, the seat 11 of the rod assembly 7 may be pressed downward if needed, to make the bar connecting member 12 visible through the elongated hole 5h of the support tube 5, and to adjust the substantially U-shaped linear groove of the bar connecting member 12 to be parallel to the line connecting between the elongated hole 5h of the support tube 5 and the elongated holes 13h of the assembly case 13.

As shown in FIG. 11, subsequently, the protruding bar 14 is inserted horizontally through the elongated hole 5h of the support tube 5, and the base end of the protruding bar 14 is fitted into the substantially U-shaped linear groove of the bar connecting member 12, so that their screw holes are aligned and fixed with screws through openings that are open from the bottom of the support tube 5 to the lower center surface of the assembly case 13.

With the configuration, when the rod 8 moves up and down, the protruding bar 14 moves up and down together.

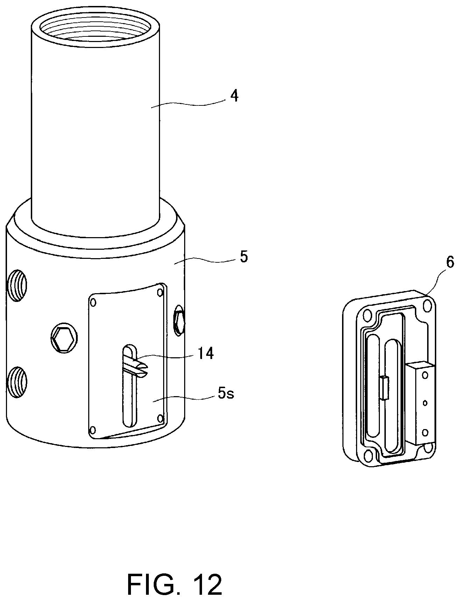

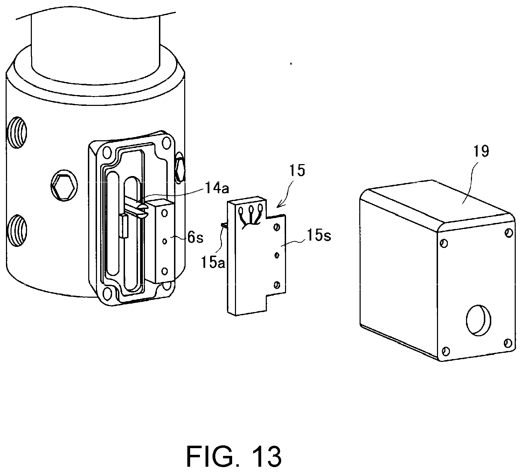

Thereafter, as shown in FIG. 12, the sensor holding member 6 is mounted on the mounting part 5s of the support tube 5, and while the detector 15a of the slide sensor 15 is inserted into the bifurcated part 14a of the protruding bar 14, as shown in FIG. 13, the attachment part 15s of the slide sensor 15 is attached to the sensor attaching part 6s of the sensor holding member 6 with screws.

Next, a case 19 is attached to the outside of the slide sensor 15 to cover the periphery, and a device for connecting wirings necessary for the slide sensor 15 is connected to a front opening of the case. The thread cap 5n is attached to the bottom of the support tube 5 to cover.

Thereafter, as shown in FIG. 1, a water supply connection member 16 and a drainage connection member 17 are connected to the opening of the cooling-water passage a of the support tube 5, and an air supply member 18 is connected to the opening of the air supply port e. The positioning pin 3 is placed onto the seat 11 of the rod assembly 7, and the external thread of the lower electrode 2 is threaded into the internal thread m of the electrode holder 4 while the rod assembly 7 is pressed downward, which assembles the lower electrode mechanism 1 of the present embodiment.

In the lower electrode mechanism 1 assembled in the manner described above, since the slide sensor 15 is disposed radially away from the periphery of the rod 8, dew condensation on the lower electrode 2 itself and/or around the rod 8 does not adversely affect the slide sensor 15, increasing the detection accuracy of the stroke position.

Further, the assembly case 13 and the sensor holding member 6 are made of electrically insulating materials, and the elongated hole 6h of the sensor holding member 6 is one size smaller than the elongated hole 5h of the support tube 5. With this configuration, even when the protruding bar 14 and the support tube 5 are composed of metal members, their electrical interference with the slide sensor 15 can be avoided, further increasing the detection accuracy.

Further, in connecting the distal end of the protruding bar 14 and the detector 15a of the slide sensor 15, the bifurcated part 14a at the distal end of the protruding bar 14 is configured to sandwich the detector 15a in the vertical direction, which simplifies the procedure of replacement of the slide sensor 15, and increases the durability because no excessive force is applied to the connecting portion of the slide sensor 15 and the like.

Embodiments of the present invention have been described with particular reference to the examples illustrated. However, it will be appreciated that variations and modifications may be made to the examples described within the scope of the present claims. For example, the water-cooling mechanism of the electrode holder 4 is optional, and so are the method of connecting the electrode holder 4 and the support tube 5.

Since a lower electrode mechanism for use in combination with an upper electrode mechanism can be downsized and simplified, and it is possible to reliably prevent defective products from being welded, the present lower electrode mechanism is expected to be further widely used in the welding industry in the future.

### REFERENCE SIGNS LIST

- 1: lower electrode mechanism
- 2: lower electrode
- 4: electrode holder
- 5: support tube
- 5h: elongated hole
- 6: sensor holding member
- 7: rod assembly
- 8: rod
- 10: spring
- 12: bar connecting member
- 13: assembly case
- 13h: elongated hole
- 14: protruding bar
- 14a: bifurcated part
- 15: slide sensor
- 15a: detector

## Claims

1. A method of assembling a lower electrode mechanism (1), the lower electrode mechanism including an electrode holder (4), a support tube (5) supporting the electrode holder and having an elongated hole (5h), a rod assembly (13) assembled in the electrode holder and including a rod (8) biased by a compression spring (10), a tubular assembly case (13) for covering the periphery of the lower end of the rod assembly and having an elongated hole (13h) on its side, a slide sensor (15) to be attached around the elongated hole of the support tube, and a protruding bar (14) for connecting a detector (15a) of the slide sensor and a rod of the rod assembly, the method comprising:
integrally assembling the support tube and the electrode holder;
inserting the assembly case into the support tube from the bottom and aligning the elongated hole of the support tube with the elongated hole of the assembly case to assemble the support tube and the assembly case;
inserting the rod assembly into the support tube from the top of the electrode holder and fixing the rod assembly inside the assembly case disposed in the support tube;
placing a lower end of the rod of the rod assembly to a position visible through the elongated hole of the support tube, and inserting a protruding bar into the support tube through the elongated hole of the support tube, so as to fix a base end of the protruding bar to the lower end of the rod; and
connecting a distal end of the protruding bar to a detector of the slide sensor to mount the slide sensor on the support tube.

2. The method of assembling a lower electrode mechanism for welding according to claim 1, wherein
the rod assembly is connected to the protruding bar via a bar connecting member attached to the lower end of the rod.

3. The method of assembling a lower electrode mechanism for welding according to claim 1 or 2, wherein
the support tube is connected to the slide sensor by interposing a sensor holding member having an elongated hole between the support tube and the slide sensor.

4. A lower electrode mechanism for welding including:
an electrode holder,
a support tube supporting the electrode holder and having an elongated hole,
a rod assembly assembled in the electrode holder and including a rod biased by a compression spring,
a tubular assembly case for covering the periphery of the lower end of the rod assembly and having an elongated hole on its side,
a slide sensor attached around the elongated hole of the support tube, and
a protruding bar for connecting a detector of the slide sensor and a rod of the rod assembly,
wherein the assembly case is disposed in the support tube and the elongated hole of the support tube aligned with the elongated hole of the assembly case;
and the rod assembly is fixed inside the assembly case;
and the protruding bar extends into the support tube through the elongated hole of the support tube, so as to fix a base end of the protruding bar to a lower end of the rod; and
a distal end of the protruding bar is connected to a detector of the slide sensor.

5. The lower electrode mechanism for welding according to claim 4, wherein the support tube is connected to the slide sensor by interposing a sensor holding member having an elongated hole between the support tube and the slide sensor.

6. The lower electrode mechanism for welding according to claim 5, wherein
the assembly case and the sensor holding member are composed of an electrically insulating material, and the elongated hole in the sensor holding member is one size smaller than the elongated hole in the mounting part of the support tube.

7. The lower electrode mechanism for welding according to claim 5 or 6, wherein
for a connection configuration between the distal end of the protruding bar and the detector of the slide sensor, a bifurcated part of the distal end of the protruding bar sandwiches the detector in a vertical direction to allow relative movement in a horizontal direction.

8. The lower electrode mechanism for welding according to any of claims 5 to 7, assembled by the method according to claim 3.
